(19) Europäisches Patentamt
European Patent Office
Office européen des brevets

(11) **EP 2 056 093 B1**

(12) **FASCICULE DE BREVET EUROPEEN**

(45) Date de publication et mention
de la délivrance du brevet:
**17.11.2010 Bulletin 2010/46**

(51) Int Cl.:
***G01N 21/53*** *(2006.01)* ***G06T 7/60*** *(2006.01)*

(21) Numéro de dépôt: **08167694.2**

(22) Date de dépôt: **28.10.2008**

(54) **Procédé de détection d'un phénomène perturbateur de visibilité pour un véhicule**

Verfahren zur Erkennung eines die Sichtweite eines Fahrzeuges störenden Phänomens

Method for detection of a phenomenon perturbating the visibility for a vehicle

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **31.10.2007 FR 0707683**

(43) Date de publication de la demande:
**06.05.2009 Bulletin 2009/19**

(73) Titulaire: **Valeo Vision**
**93012 Bobigny Cedex (FR)**

(72) Inventeurs:
• **Rebut, Julien**
**75019, PARIS (FR)**
• **Leleve, Joël**
**93800, EPINAY SUR SEINE (FR)**

• **Hue, David**
**78400, CHATOU (FR)**

(56) Documents cités:
**EP-A- 0 687 594 EP-A- 1 067 399**
**WO-A-97/16926 WO-A-03/069275**
**DE-A1- 10 303 046 FR-A- 2 847 367**

• **HAUTIERE NICOLAS ET AL: "Towards fog-free in-vehicle vision systems through contrast restoration" PROC IEEE COMPUT SOC CONF COMPUT VISION PATTERN RECOGNIT; PROCEEDINGS OF THE IEEE COMPUTER SOCIETY CONFERENCE ON COMPUTER VISION AND PATTERN RECOGNITION; 2007 IEEE COMPUTER SOCIETY CONFERENCE ON COMPUTER VISION AND PATTERN RECOGNITION, CVPR'07 2007, 27 juin 2007 (2007-06-27), XP002483695**

## Description

### Domaine de l'invention

La présente invention concerne un procédé de détection d'un phénomène perturbateur de visibilité pour un véhicule automobile, et un dispositif de détection permettant de mettre en oeuvre ledit procédé.
Elle trouve une application particulière dans le domaine des véhicules automobiles.

### Etat de la technique

Dans le cas d'une application à un véhicule automobile, un procédé de détection d'un phénomène perturbateur de visibilité, tel que du brouillard, connu de l'état de la technique, utilise une image vidéo pour détecter de nuit un brouillard de forte densité. A cet effet, il utilise le halo lumineux formant une ellipse qui est généré par la réflexion des projecteurs sur le brouillard. La détection du brouillard se fait en fonction des paramètres de cette ellipse.
Un problème de cet état de la technique est qu'il ne permet pas de détecter un brouillard de moyenne ou faible densité, car un tel brouillard ne génère pas de halo assez visible pour former une ellipse lorsqu'il est éclairé par les projecteurs, ledit halo ne pouvant en conséquence être utilisé pour la détection du brouillard.
Dans WO03/069275 A1 un procédé de détermination de la présence d'un brouillard a été proposé, dans lequel on capture au moins une première image de la scène à partir du véhicule, on fournit l'ordonnée de l'horizon pour ladite première image, on applique un masque sur ladite première image pour obtenir une zone de ladite première image, on enregistre la luminance en chaque point de ladite première image, on effectue une moyenne de cette luminance le long de l'abscisse de ladite zone pour obtenir une courbe de la luminance verticale en fonction de chaque ordonnée de ladite zone, et qui présente au moins un point d'inflexion, on détermine l'ordonnée d'au moins un point d'inflexion de la courbe de luminance verticale, on compare ladite ordonnée du point d'inflexion à ladite ordonnée de l'horizon, et on indique la présence de brouillard lorsque ladite ordonnée du point d'inflexion est située en dessous de ladite ordonnée de l'horizon.

### Objet de l'invention

La présente invention a pour but la détection d'un phénomène perturbateur de visibilité tel que du brouillard, de nuit, et ce quelle que soit la densité du brouillard.
Selon un premier objet de l'invention, ce but est atteint par un procédé de détection d'un phénomène perturbateur de visibilité dans l'environnement d'un véhicule automobile comportant les étapes consistant à:

- émettre dans l'environnement du véhicule un faisceau lumineux par au moins un des projecteurs du véhicule ;

- déterminer au moins un point d'intérêt dans une image acquise de l'environnement du véhicule ;

- déterminer une région d'intérêt dans ladite image ;

- déterminer une courbe de niveaux de gris à partir de ladite région d'intérêt ; et

- déterminer une aire dans ladite courbe de niveaux de gris en fonction du point d'intérêt déterminé.

Comme on va le voir en détail par la suite, l'aire déterminée dans la courbe de niveaux de gris va se modifier en fonction des variations de l'atmosphère environnante autour d'un véhicule automobile et devant le véhicule et donc en fonction de la présence de brouillard qui va modifier cette atmosphère. Cette aire va ainsi permettre de détecter du brouillard quelle que soit sa densité et de plus déterminer la densité du brouillard grâce à différentes valeurs de l'aire. Il n'est donc pas nécessaire d'utiliser différentes méthodes en fonction de la densité du brouillard. De plus, un tel procédé est simple à mettre en oeuvre.
Selon des modes de réalisation non limitatifs, le procédé présente en outre les caractéristiques suivantes :

- Le procédé comporte une étape supplémentaire de déterminer la présence d'un phénomène perturbateur en fonction d'au moins une valeur seuil de ladite aire. Cela permet non seulement de détecter la présence du phénomène perturbateur mais également de déterminer sa densité.

- Le procédé comporte une étape supplémentaire de déterminer une distance de visibilité en fonction de l'aire déterminée. Cela permet de fournir par la suite une vitesse maximale de conduite pour garantir une distance de sécurité optimale.

- Le point d'intérêt se situe sur la ligne d'horizon dans l'image. La ligne d'horizon est simple à déterminer en traitement d'images.

- Le véhicule comporte un angle au volant, et ladite région d'intérêt est déterminée dans ladite image en fonction dudit angle au volant. Cela permet de prendre en compte la direction de la route sur laquelle se déplace le véhicule et ainsi d'avoir une région d'intérêt homogène même lorsque la route est sinueuse.

Selon un deuxième objet de l'invention, elle concerne un dispositif de détection d'un phénomène perturbateur de visibilité dans l'environnement d'un véhicule automobile comportant :

- au moins un projecteur pour :

    o émettre un faisceau lumineux dans l'environnement du véhicule ;

- une unité de contrôle pour :

    o déterminer au moins un point d'intérêt dans une image acquise de l'environnement du véhicule ;
    o déterminer une région d'intérêt dans ladite image ;
    o déterminer une courbe de niveaux de gris à partir de ladite région d'intérêt ; et
    o déterminer une aire dans ladite courbe de niveaux de gris en fonction du point d'intérêt déterminé.

Selon un troisième objet de l'invention, elle concerne un produit programme d'ordinateur comportant une ou plusieurs séquences d'instructions exécutables par une unité de traitement d'information, l'exécution desdites séquences d'instructions permettant une mise en oeuvre du procédé selon l'une quelconque des caractéristiques précédentes.

**Brève description des Figures**

D'autres caractéristiques et avantages de la présente invention seront mieux compris à l'aide de la description et des dessins non limitatifs parmi lesquels :

- la Fig. 1 représente un diagramme d'un mode de réalisation non limitatif du procédé de détection selon l'invention ;

- la Fig. 2 est une représentation schématique d'une image de l'environnement d'un véhicule acquise par le procédé de la Fig. 1 en l'absence de brouillard ;

- la Fig. 3 est une représentation schématique d'une image de l'environnement d'un véhicule acquise par le procédé de la Fig. 1 en présence de brouillard ;

- la Fig. 4 représente l'image de la Fig. 2 et une courbe de niveaux de gris associée ;

- la Fig. 5 représente l'image de la Fig. 3 et une courbe de niveaux de gris associée ;

- la Fig. 6 représente l'image de la Fig. 2 sur laquelle est superposée une courbe de niveaux de gris associée et une aire dans cette courbe de niveaux de gris ;

- la Fig. 7 représente l'image de la Fig. 3 sur laquelle est superposée une courbe de niveaux de gris associée et une aire dans cette courbe de niveaux de gris ;

- la Fig. 8 illustre une variation en fonction du temps de l'aire dans une courbe de niveaux de gris calculée par le procédé de la Fig. 1 ; et

- la Fig. 9 illustre un mode de réalisation non limitatif d'un dispositif de mise en oeuvre du procédé de la Fig. 1.

**Description détaillée de modes de réalisation non limitatifs de l'invention**

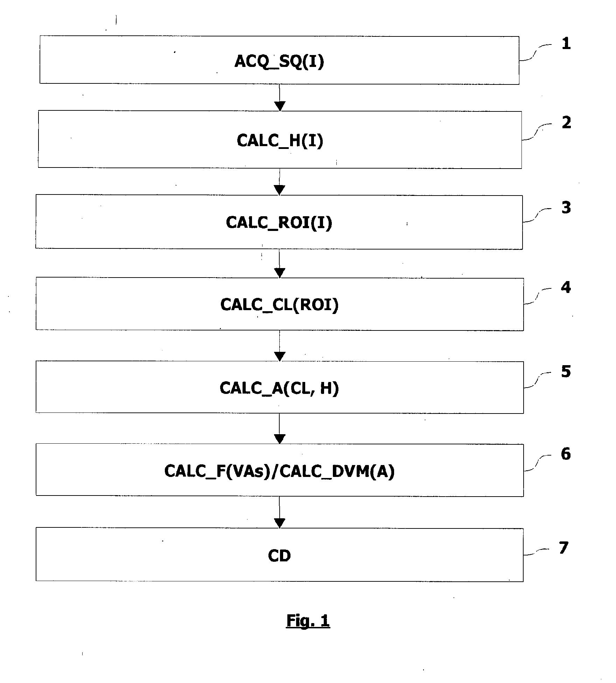

Le procédé de détection d'un phénomène perturbateur de visibilité selon l'invention est décrit dans un mode de réalisation non limitatif à la Fig. 1.

Dans cette application, la détection se fait à partir d'un dispositif de détection embarqué dans un véhicule V, le véhicule comprenant notamment :

- des projecteurs, et
- une caméra vidéo décrite plus loin.

Dans la suite de la description, un phénomène perturbateur de visibilité F tel que du brouillard est pris comme exemple non limitatif.

Bien entendu, le procédé peut s'appliquer à d'autres phénomènes perturbateurs de visibilité, c'est-à-dire tout phénomène F qui crée une perturbation atmosphérique de sorte à engendrer une perte de visibilité pour un utilisateur du véhicule V, tel que de la pluie forte ou encore des projections d'eau (appelées Gischt en allemand ou Spray en anglais) générées par des véhicules devançant le véhicule V considéré.

Le procédé de détection comporte les étapes suivantes telles qu'illustrées à la Fig 1:

- déterminer au moins un point d'intérêt H dans une image I acquise de l'environnement du véhicule V (étape CALC_H(I)) ;

- déterminer une région d'intérêt ROI dans ladite image I (étape CALC_ROI(I)) ;

- déterminer une courbe de niveaux de gris CL à partir de ladite région d'intérêt ROI (étape CALC_CL(ROI)) ;

- déterminer une aire A dans ladite courbe de niveaux de gris CL en fonction du point d'intérêt H calculé (étape CALC_A(CL, H)).

Dans un mode de réalisation non limitatif, il comporte en outre une étape supplémentaire de :

- déterminer la présence de brouillard F en fonction d'au moins une valeur seuil VAs de ladite aire A (étape CALC_F(VAs)).

Dans un mode de réalisation non limitatif, il comporte en outre une étape supplémentaire de :

- déterminer une distance de visibilité DVM en fonction de l'aire déterminée A (étape CALC_DVM(A)).

On notera que ces deux modes de réalisation peuvent être combinés ensemble.

Dans un mode de réalisation non limitatif, il comporte en outre une étape de :

- acquérir au moins une image I par une caméra CAM (étape ACQ_SQ(I)).

On notera que cette étape d'acquisition d'image I peut ne pas être compris dans le procédé décrit, mais peut faire partie d'un autre procédé exécuté en amont du procédé décrit.

Les étapes sont décrites en détail ci-après.

**Dans une première étape 1),** on acquiert au moins une image I. par la caméra du véhicule V.

La caméra vidéo CAM étant placée, dans l'exemple pris, à l'avant du véhicule V, l'image acquise I correspond à l'environnement E du véhicule V se trouvant dans le champ de la caméra CAM et donc à l'avant du véhicule V. On va donc détecter un phénomène perturbateur F tel que du brouillard se trouvant à l'avant du véhicule V.

La lumière issue d'un faisceau lumineux FX émis depuis un des projecteurs PJ est diffusée en présence de particules du brouillard F en suspension dans l'atmosphère. La longueur d'onde de ce faisceau lumineux étant compatible avec le spectre d'analyse de la camera CAM, et les particules constitutives du brouillard F se situant dans le champ de vision de la caméra CAM, il est alors possible de capter une image intégrant la lumière diffusée dans le brouillard F.

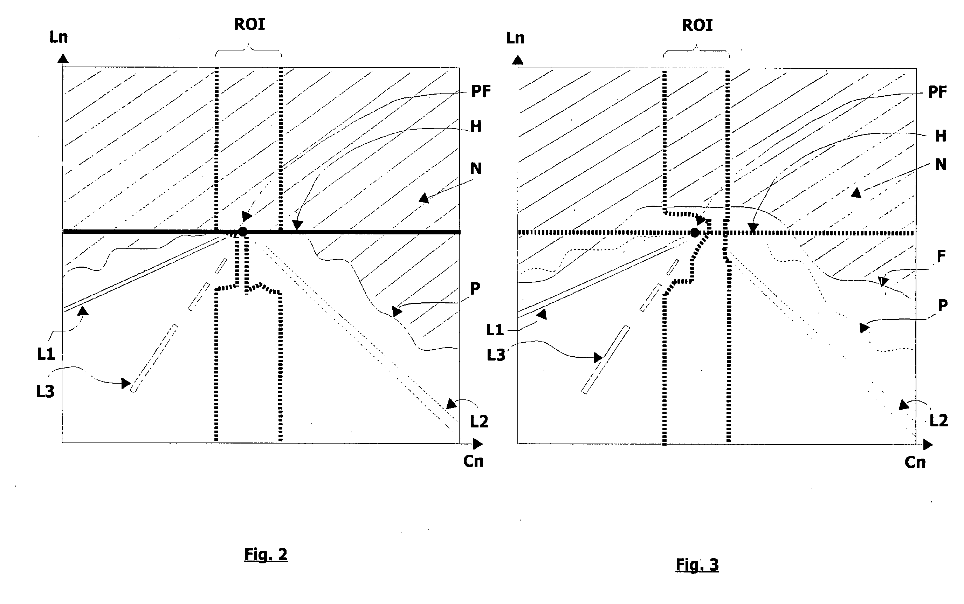

La Fig. 2 montre un exemple schématique d'image acquise I de nuit en l'absence de brouillard F, tandis que la Fig. 3 montre un exemple schématique d'une image acquise I de nuit en présence de brouillard F. En abscisse d'une image I sont représentées les colonnes Cn de cette image I, tandis qu'en ordonnée sont représentées les lignes Ln de cette image I.

Ces images I donnent un aperçu de la lumière diffusée de nuit avec un faisceau lumineux FX de projecteurs PJ.

La partie blanche représente la lumière diffusée de nuit avec le faisceau lumineux FX, tandis que la partie hachurée en diagonale notée N représente l'environnement E, ici à l'avant du véhicule V, dans le champ de la caméra CAM non éclairé par le faisceau lumineux FX.

Sur les deux figures Fig. 2 et Fig. 3, on peut voir :

- une route sur laquelle roule le véhicule V, représentée par les deux lignes de marquage au sol L1 et L2, et celle du milieu L3, et

- un paysage P bordant la route.

Sur la Fig. 3, le paysage P bordant la route est représenté en pointillé car il est voilé par le brouillard F représenté de façon schématique.

**Dans une deuxième étape 2),** on détermine au moins un point d'intérêt H dans une image I acquise de l'environnement E du véhicule V.

Dans un mode de réalisation non limitatif, ce point d'intérêt se situe sur la ligne d'horizon H dans l'image acquise I.

On peut dans des exemples non limitatifs, déterminer la ligne d'horizon H à partir d'un calcul de point de fuite PF dans l'image I issu de l'intersection du tracé des lignes blanches L1 et L2 sur la route, ou encore la déterminer à partir de capteurs d'assiette.

La détermination de la ligne d'horizon H dans une image étant connue de l'homme du métier, elle n'est pas décrite en détail ici.

On notera que le fait de déterminer la ligne d'horizon H comme point(s) d'intérêt est facile à calculer.

La ligne d'horizon H est représentée sur les deux Figures 2 et 3.

Sur la Fig. 3, la ligne d'horizon H est en pointillée car elle est voilée en raison du brouillard F.

**Dans une troisième étape 3),** on détermine une région d'intérêt ROI dans ladite image I.

Dans des exemples non limitatifs la région d'intérêt ROI peut étre :

- une ligne droite verticale passant par un point de référence PR dans l'image I,

- déterminée au voisinage d'un point de référence PR par une surface se situant de part et d'autre du point de référence telle qu'illustrée sur la Fig. 2 et la Fig. 3 par lignes en pointillés.

Dans un mode de réalisation non limitatif, le point de référence PR est le point de fuite PF tel qu'illustré sur les Fig. 2 et Fig. 3.

Dans une variante de ce mode, le point de fuite PF est centré sur l'image I acquise. Ainsi, pour un exemple d'image I de format 640*480, son abscisse PFx se situe à 320 pixels, son ordonnée PFy est sur la ligne d'horizon H. On se place dans le cas où l'axe optique de la caméra CAM est parallèle à la direction du véhicule V.

Une région d'intérêt ROI selon le deuxième exemple de réalisation est déterminée de la manière suivante, dans un mode de réalisation non limitatif :

- dans une première étape, on détermine les contours dans l'image I de sorte à enlever des zones dans l'image I non homogènes, le but étant d'avoir un même niveau de gris en moyenne. Dans des exemple non limitatifs, des méthodes de détection de contours (appelées « edge method » en anglais) telles que les méthodes Sobel, Prewitt, Roberts, Zerocross, Canny etc. peuvent être utilisées ;

- dans une deuxième étape, on détermine la région d'intérêt ROI en partant de la ligne d'horizon H et en utilisant un algorithme d'accroissement de région vers le haut et vers le bas de l'image acquise I, bien connue de l'homme du métier. On notera que pour déterminer la ligne d'horizon H, on peut dans des exemples non limitatifs, la déterminer à partir d'un calcul de point de fuite PF dans l'image I issu de l'intersection du tracé des lignes blanches L1 et L2 sur la route, ou encore la déterminer à partir de capteurs d'assiette. La détermination de la ligne d'horizon H dans une image étant connue de l'homme du métier, elle n'est pas décrite en détail ici.

Ainsi, on obtient une région d'intérêt ROI homogène dans laquelle sont exclus :

- le bruit, les parasites, et

- les objets non homogènes tels que des véhicules, ou les lignes blanches de la route telles que la ligne L3, comme illustré sur la Fig. 2 et la Fig. 3.

Dans un mode de réalisation non limitatif, afin d'avoir une région ROI homogène même lorsque la route est sinueuse, en outre la région d'intérêt ROI est déterminée dans ladite image I en fonction de l'angle au volant $\alpha$ du véhicule V.

Dans une première variante de réalisation non limitative :

- la région d'intérêt ROI est centrée par rapport au point de référence PR (vu précédemment) dans l'image I, lorsque l'angle au volant $\alpha$ est nul ; et
- la région d'intérêt ROI est décalée latéralement par rapport au point de référence PR dans l'image I, lorsque l'angle au volant $\alpha$ n'est pas nul. Dans un exemple non limitatif, la région d'intérêt ROI est décalée de l'angle au volant $\alpha$ fois trois.

Ainsi, lorsque l'angle au volant $\alpha$ est positif, la région d'intérêt ROI est décalée à droite sur l'image I, tandis que lorsque l'angle au volant $\alpha$ est négatif, la région d'intérêt ROI est décalée à gauche sur l'image I. Par exemple, si l'angle au volant $\alpha$ est égale à 10°, la région d'intérêt ROI est décalée de 30 pixels à droite par rapport au point de référence PR, et est donc centrée sur un nouveau point de référence de 320+30 pixels.

Dans une deuxième variante de réalisation non limitative :

- la région d'intérêt ROI est centrée par rapport au point de référence PR (vu précédemment) dans l'image I, lorsque l'angle au volant $\alpha$ est inférieur ou égal à 15° en valeur absolue ; et

- la région d'intérêt ROI est décalée latéralement par rapport au point de référence PR dans l'image I, lorsque l'angle au volant $\alpha$ est supérieur à 15° en valeur absolue. Dans un exemple non limitatif, la région d'intérêt ROI est décalée de l'angle au volant $\alpha$ fois trois. Ce seuil de 15° est caractéristique d'une route qui est sinueuse. Lorsque l'angle au volant $\alpha$ est inférieur à 15° en valeur absolue, en général, la route est en ligne droite, mais c'est le conducteur du véhicule V qui ne conduit pas droit.

Ainsi, lorsque l'angle au volant $\alpha$ est supérieur à +15°, la région d'intérêt ROI est décalée à droite sur l'image I (la direction de la route va vers la droite), tandis que lorsque l'angle au volant $\alpha$ est inférieur à -15°, la région d'intérêt ROI est décalée à gauche sur l'image I (la direction de la route va vers la gauche).

Par exemple, si l'angle au volant $\alpha$ est égale à -18°, la région d'intérêt ROI est décalée de 54 pixels à gauche par rapport au point de référence PR, et est donc centrée sur un nouveau point de référence de 320-54 pixels.

Ainsi, le fait de déterminer la position de la région d'intérêt ROI (et plus particulièrement sa position par rapport à l'axe des abscisses comme décrit ci-dessus) dans l'image acquise I en fonction de l'angle au volant $\alpha$, permet de prendre en compte la direction de la route et ainsi d'éviter les obstacles tels que talus, arbres, etc. se situant en face du véhicule lorsque la route est sinueuse. La région d'intérêt ROI est ainsi plus homogène.

On notera que la deuxième et la troisième étape peuvent être effectuée en parallèle le cas échéant.

**Dans une quatrième étape 4),** on détermine une courbe de niveaux de gris CL à partir de ladite région d'intérêt ROI.

L'intérêt est que la présence de brouillard F va modifier la forme de la courbe de niveaux de gris de sorte qu'en analysant cette courbe, on va pouvoir déterminer la présence de brouillard F.

Dans un mode de réalisation non limitatif, cette courbe de niveaux de gris CL est déterminée de la manière suivante. Pour chaque ligne Ln de l'image acquise I, on ne prend en compte que les pixels de la région d'intérêt ROI et on applique une combinaison de pixels Px de manière à obtenir une valeur GR pour chaque ligne, cette valeur GR étant par exemple une valeur de niveau de gris dans le cas d'une image vidéo (comme décrit plus loin).

Dans un exemple de réalisation non limitatif, la combinaison est la valeur médiane des niveaux de gris de chaque pixel Px de la ligne Ln considérée. L'avantage de la médiane est d'estimer la valeur moyenne des niveaux de gris tout en s'affranchissant des problèmes de bruits dans l'image I.

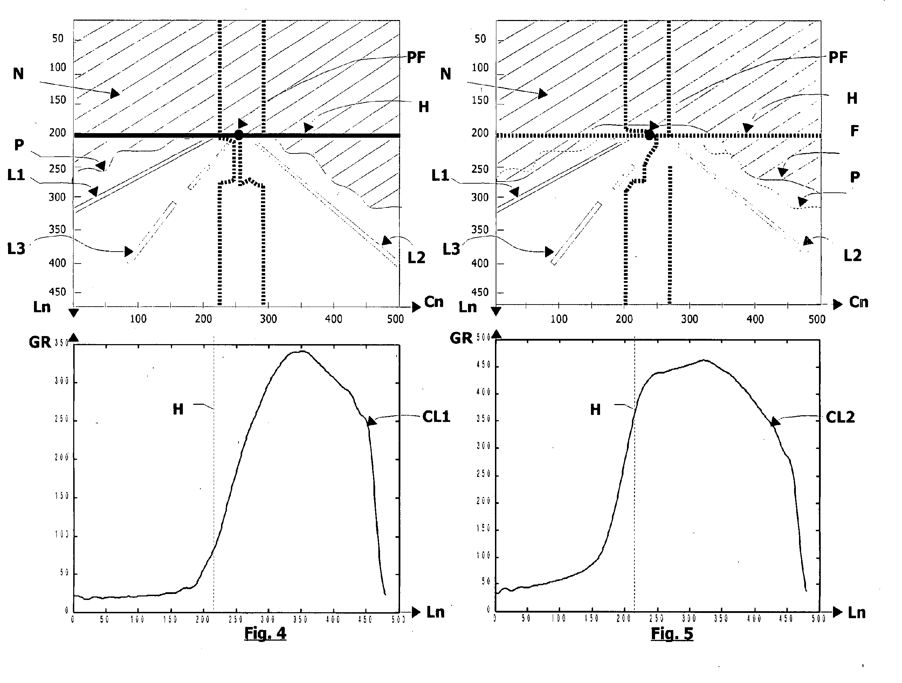

Un premier exemple de courbe de niveaux de gris CL1 est illustré sur la Fig. 4 dans le cas où il n'y a pas de brouillard F, et un deuxième exemple de courbe de niveaux de gris CL2 est illustré sur la Fig. 5 dans le cas où il existe du brouillard F.

Comme on peut le voir, pour une courbe de niveaux de gris CL, en abscisse est indiqué le numéro de ligne Ln dans l'image acquise I, tandis qu'en ordonnée est indiqué la valeur de niveau de gris GR attribué.

Sur ces deux courbes de niveaux de gris CL1 et CL2, on a également placé la ligne d'horizon H qui se trouve environ à l'abscisse 220.

On notera que dans le cas où le temps d'intégration de la caméra CAM est connu, une courbe de niveau de gris CL peut être, dans des modes de réalisation non limitatifs, soit une courbe de luminance soit une courbe de luminosité.

On rappelle que le temps d'intégration de la caméra CAM correspond au temps d'exposition à la lumière des capteurs de la caméra.

**Dans une cinquième étape 5),** on détermine une aire A dans ladite courbe de niveaux de gris CL en fonction du point d'intérêt H déterminé.

Comme on va le voir, en analysant l'aire A dans cette courbe, on va pouvoir déterminer la présence de brouillard F.

Dans un mode de réalisation non limitatif, cette aire A est déterminée en fonction de la ligne d'horizon H, le point d'intérêt se situant sur la ligne d'horizon H comme vu précédemment.

Dans une première variante de réalisation non limitative, cette aire A est l'aire correspondant au haut de l'image acquise I jusqu'à la ligne d'horizon H. C'est ainsi l'aire qui est située au dessus de la ligne d'horizon H.

L'avantage de cette variante est d'obtenir une courbe de niveaux de gris de référence CL1 sans brouillard qui soit indépendante de paramètres tel que l'infrastructure de la route (type de revêtement de la route, taux d'humidité sur la route...) etc. L'aire A1 dans la courbe de référence ainsi obtenue sera ainsi proche d'une constante sans brouillard et la courbe CL1 ainsi obtenue sera ainsi stable (le haut de l'image est noir).

Comme on va le voir ci-dessous, lors de la présence de brouillard F, l'aire A2 dans la courbe de niveaux de gris CL2 étant différente de celle A1 de la courbe de niveaux de gris de référence CL1, il sera facile d'analyser cette courbe par rapport à la courbe de référence CL1 stable pour en déduire la présence de brouillard F.

Par ailleurs, l'avantage de cette variante, est qu'il n'existe pas de diffusion de lumière au-dessus de la ligne d'horizon H, due à l'éclairage des projecteurs, en l'absence de brouillard F, alors qu'il en existe en présence de brouillard F, la diffusion de lumière étant due à la réflexion du faisceau lumineux FX des projecteurs sur les particules de brouillard F. L'analyse de la courbe de niveau de gris va permettre de mettre en exergue cette diffusion de lumière.

On notera que dans une deuxième variante de réalisation non limitative, cette aire A est l'aire correspondant au bas de l'image acquise I jusqu'à la ligne d'horizon H.

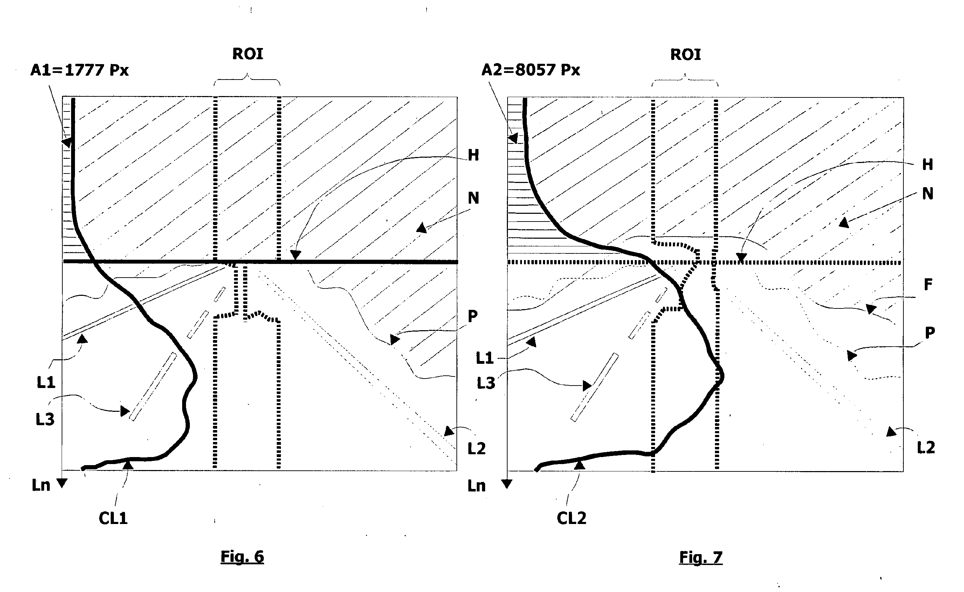

Comme on peut le voir sur les Fig. 6 et 7, des courbes de niveaux de gris CL1 et CL2 associées respectivement aux images acquises I en l'absence de brouillard F et lors de la présence de brouillard F sont superposées aux images I associées (elles ont été basculées de 90° par rapport aux exemples de courbes des Fig. 4 et 5 précédentes).

Une première aire A1 et une deuxième aire A2 associées respectivement à la première courbe de niveaux de gris CL1 et à la deuxième courbe de niveaux de gris CL2 sont illustrées (hachures horizontales) respectivement sur ces deux Fig. 6 et 7 selon la première variante de réalisation (haut de l'image).

**Dans une sixième étape 6),** on détermine la présence de brouillard F et sa densité.

Dans un premier mode de réalisation, on détermine la présence de brouillard F et sa densité en fonction d'au moins une valeur seuil VAs de ladite aire A.

Plus particulièrement, la présence de brouillard F et sa densité est déterminée en fonction d'une pluralité de valeurs seuils VAs qui vont permettre de définir que :

- le véhicule s'approche/s'éloigne d'une nappe de brouillard F,
- le véhicule se trouve dans le brouillard F et d'autre part, de définir que :
- le brouillard F est de faible densité,
- le brouillard F est de densité moyenne,
- le brouillard F est de forte densité.

On notera que la densité du brouillard F est fonction d'une distance de visibilité DVM.

Ainsi, lorsque le brouillard F est de :

- faible densité, la distance de visibilité DVM correspondante se situe au-delà de 100 mètres (ente 100 et 150 mètres par exemple),
- moyenne densité, la distance de visibilité DVM correspondante se situe entre 60 mètres et 100 mètres, et
- forte densité, la distance de visibilité DVM correspondante est de moins de 60 mètres.

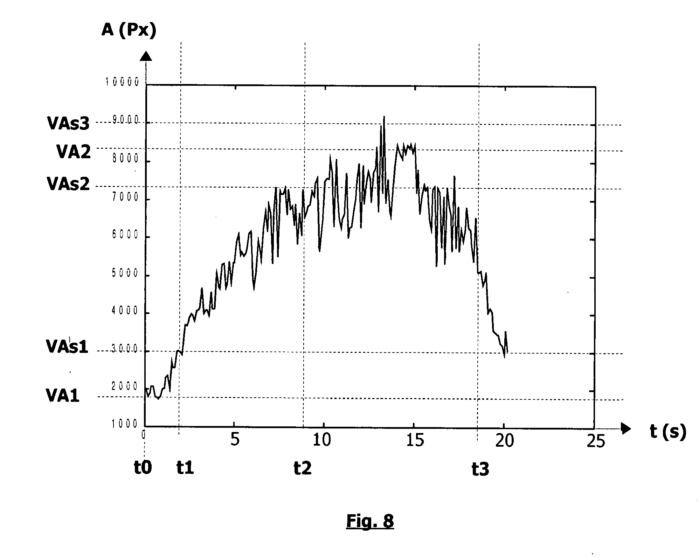

La Fig. 8 illustre un exemple non limitatif d'une variation de l'aire A déterminée dans une courbe de niveaux de gris au cours du temps, c'est-à-dire sur une séquence SQ d'images I acquises.

En abscisse est représenté le temps en secondes, et en ordonnée l'aire A en pixels.

Au temps t0 = 0, la valeur de l'aire A correspond à l'absence de brouillard. On a représenté dans un exemple non limitatif, la valeur VA1 équivalente à 1777 pixels qui correspond à l'aire A1 dans la courbe de niveaux de gris de référence CL1 sans brouillard F représentée précédemment à la Fig. 6.

Au fur et à mesure de l'acquisition des images, la valeur de l'aire A change en fonction des variations de l'atmosphère environnante autour du véhicule et également de l'atmosphère devant le véhicule, et donc en fonction de la présence ou non de brouillard F dans lequel se trouve le véhicule ou dans lequel va entrer le véhicule.

Ainsi, on peut voir qu'entre les temps t0 et t1, la valeur de l'aire A augmente et devient supérieure à une première valeur seuil VAs1. On en déduit que l'on entre dans une zone de brouillard F au temps t1.

Le véhicule V ne se trouve pas encore dans le brouillard, mais détecte qu'il approche du brouillard F.

Ainsi, les variations progressive de l'aire A permettent de détecter qu'il existe une nappe de brouillard au loin dans laquelle on va entrer. On anticipe donc la détection de brouillard F et ce grâce à la caméra avant.

Dans un exemple non limitatif, la première valeur seuil VAs1 est égale à 3000. En deçà de cette valeur, on estime que l'on est en présence de bruit.

Entre les temps t2 et t3, la valeur de l'aire A est supérieure à une deuxième valeur seuil VAs2 caractéristique du brouillard F.

Le véhicule V se trouve ainsi dans la nappe de brouillard F.

Dans un exemple non limitatif, cette valeur Vas2 se situe autour de 7000 pixels et correspond à un brouillard de moyenne densité.

La valeur VA2 équivalente à 8057 pixels par exemple correspond à l'aire A2 dans la courbe de niveaux de gris CL2 avec brouillard F représentée précédemment dans la Fig. 7 se situe ainsi au delà de ce deuxième seuil VAs2.

Au-delà du temps t3, la valeur de l'aire A redevient inférieure à la valeur seuil VAs2 et diminue progressivement. On en déduit que l'on sort de la zone de brouillard F.

Une troisième valeur seuil VAs3 est utilisée pour définir que le brouillard F dans lequel se trouve le véhicule V est de forte densité. Dans un exemple de réalisation non limitatif, cette troisième valeur seuil VAs3 est supérieure à 9000 pixels.

On notera que dans l'exemple représenté à la Fig. 8, cette valeur seuil n'est jamais atteinte.

Dans un deuxième mode de réalisation, on détermine la présence de brouillard F et sa densité en fonction d'une distance de visibilité DVM, cette dernière étant déterminée en fonction de l'aire déterminée A précédemment.

Dans un mode de réalisation non limitatif, lorsque l'aire A utilisée correspondant au haut de l'image acquise I jusqu'à la ligne d'horizon H, la relation entre la distance de visibilité DVM et l'aire déterminée A est égale à :

$$DVM = 275 - A*15/600. \quad [1]$$

On notera que dans ce cas, cette relation [1] ne dépend pas du type de bitume, de la qualité de la route, ou tout autre caractéristique de la route, comme expliqué précédemment.

Bien entendu, d'autres coefficients peuvent être utilisés.

Selon la distance de visibilité DVM ainsi calculée, on en déduit la présence de brouillard F, et sa densité.

Ainsi, dans un exemple non limitatif, lorsque la distance de visibilité est inférieure à 150 mètres, on peut en déduire qu'il existe du brouillard F.

Par ailleurs, en ce qui concerne la densité, lorsque la distance de visibilité est inférieure à 60 mètres, on peut en déduire que la brouillard F est de forte densité, tandis que lorsqu'elle est supérieure à 60 mètres et au-delà, on peut en déduire que le brouillard F est de moyenne (60-100 mètres) à faible densité (100-150 mètres).

Le calcul de la distance de visibilité DVM permet ainsi de fournir par la suite au conducteur du véhicule V une information sur la vitesse maximale Vmax à ne pas dépasser pour ne pas être en danger, et garantir ainsi une distance de sécurité optimale. Dans un exemple non limitatif, pour une vitesse de 90 km/h, on sait que la distance d'arrêt est d'environ 80 mètres.

Bien entendu, on peut également combiner ces deux modes (utilisation des seuils VAs et calcul de la distance de visibilité DVM), soit en parallèle, soit l'un après l'autre.

**Dans une septième étape 7),** après que du brouillard F ait été détecté, sa densité déterminée et le cas échéant la distance de visibilité DVM calculée, un traitement adéquat CD en temps réel sur le véhicule V peut être exécuté.

Dans des exemples non limitatifs, il peut s'agir :

- d'adapter automatiquement l'éclairage des projecteurs PJ véhicule V en augmentant l'intensité des projecteurs PJ Code ou Route (par exemple pour mieux visualiser les lignes blanches de la route) et/ou en allumant les feux de brouillard (avant et arrière) ; ou

- d'envoyer un signal d'alerte au conducteur du véhicule V de manière à ce qu'il augmente lui-même l'intensité des projecteurs PJ par exemple s'il peut le faire pour éclairer plus ou qu'il allume lui-même les feux de brouillard ; ou

- de commuter automatiquement les projecteurs PJ de Code en Route
  ou inversement ; ou

- de limiter automatiquement la vitesse du véhicule à une vitesse maximale autorisée Vmax dans ce cas ; ou

- d'envoyer un signal d'alerte au conducteur du véhicule V pour qu'il diminue sa vitesse en fonction d'une vitesse maximale autorisée et d'une vitesse d'arrêt véhicule V etc.

Selon la densité du brouillard F, dans des exemples non limitatifs, on peut déterminer :

- un seuil d'allumage des feux de brouillard pour une distance de visibilité DVM donnée ; et

- un seuil de commutation automatique des projecteurs PJ de Code en Route pour une distance de visibilité DVM supérieure ou égale à un seuil donné ; ou

- un seuil de commutation automatique des projecteurs PJ de Route en Code pour une distance de visibilité DVM inférieure à un seuil donné etc.

On notera que ces différents seuils peuvent être définis dans des exemples non limitatifs selon une réglementation existante ou selon une norme constructeur.

On notera que cette septième étape se fait au fur et à mesure du traitement des images vidéo I par le procédé décrit ci-dessus.

Ainsi, le traitement adéquat CD, tel que par exemple l'adaptation automatique de l'éclairage des projecteurs PJ en Code ou en Route, est exécuté en temps réel puisqu'il est effectué après chaque détection d'un phénomène perturbateur F, une détection étant effectuée à chaque acquisition d'image I.

On notera que bien entendu, on peut effectuer le traitement CD en utilisant :

- la distance de visibilité DVM sans utiliser les seuils VAs d'une courbe de niveaux de gris CL ; ou
- les seuils VAs d'une courbe de niveaux de gris CL sans utiliser la distance de visibilité DVM ; ou
- la distance de visibilité DVM et les seuils VAs d'une courbe de niveaux de gris CL.

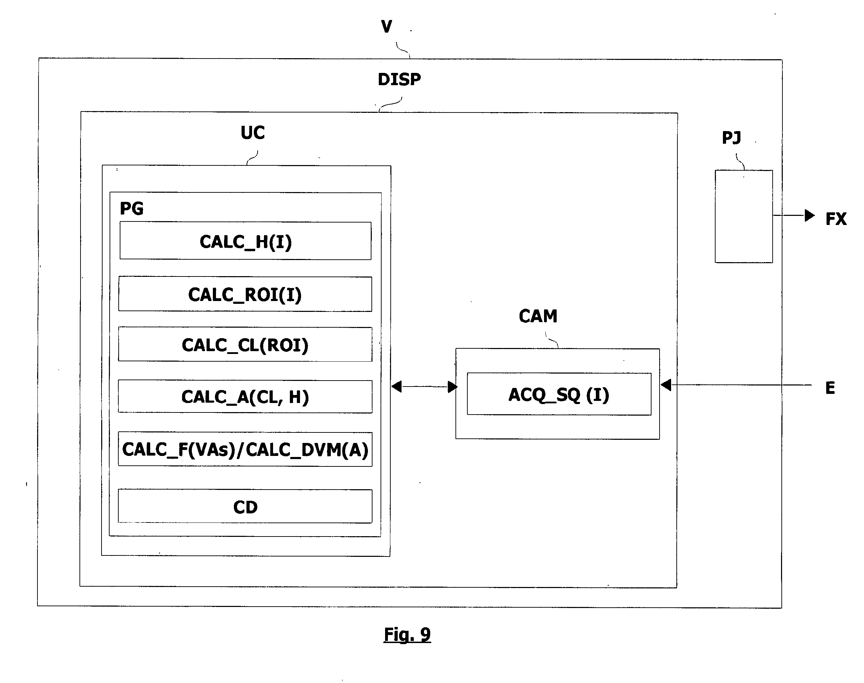

Le procédé de l'invention est mis en oeuvre par un dispositif DISP de détection représenté à la Fig. 9.

Ce dispositif DISP est intégré dans le véhicule V.Ce dispositif DISP comporte notamment :

- une unité de contrôle UC pour :

- déterminer au moins un point d'intérêt H dans une image I acquise de l'environnement E du véhicule V ;

- déterminer une région d'intérêt ROI dans ladite image I ;

- déterminer une courbe de niveaux de gris CL à partir de ladite région d'intérêt ROI ; et

- déterminer une aire (A) dans ladite courbe de niveaux de gris (CL) en fonction du point d'intérêt (H) déterminé.

L'unité de contrôle UC permet en outre de commander le projecteur PJ et la caméra CAM et de commander (adaptation automatique de l'éclairage des projecteurs PJ en Code ou Route, allumage automatique des feux de brouillards) ou d'effectuer (envoi d'un signal d'alerte) le traitement adéquat CD.

Dans un mode de réalisation non limitatif, le dispositif de détection DISP peut en outre comporter la caméra vidéo CAM permettant d'acquérir une image I telle qu'illustrée à la Fig. 9. On notera que dans ce cas, l'unité de contrôle UC peut également se trouver dans la caméra vidéo CAM.

La caméra CAM est placée dans un exemple non limitatif derrière le pare-brise du véhicule V. Dans un autre exemple non limitatif, la caméra CAM est placée près d'un des projecteurs PJ du véhicule V.

Elle est par exemple du type VGA de définition 640*480 (soit une image acquise I de 8 bits (par pixel) et de 640 colonnes et 480 lignes) et comporte une lentille (non représentée) à cet effet. L'image I ainsi acquise est en pleine résolution.

A chaque pixel Px est attribuée une valeur spécifique GR appelée valeur de niveau de gris suite aux traitements utilisés dans la caméra (gestion du temps d'intégration, de la courbe de réponse de la caméra, gain etc). Cette valeur de niveau de gris peut être exprimée en différents formats, par exemple en 8bit, 12bit ou autre.

Par exemple, le niveau de gris du pixel en 8bit peut avoir une valeur entre 0 et 255, tandis que le niveau de gris du pixel en 12bit peut avoir une valeur entre 0 et 4095.

Dans un exemple non limitatif, la caméra vidéo CAM acquiert 10 images par seconde.

Bien entendu, une caméra de type différent et avec une résolution différente peut être utilisée.

Bien entendu, la caméra CAM qui est utilisée pour la fonctionnalité détection de brouillard F peut être également utilisée pour d'autres fonctionnalités connues telles que :

- la détection de lignes pour le marquage au sol (permettant d'éviter un franchissement involontaire des lignes),
- la commutation automatique des projecteurs Route en Code ou inversement lors de l'apparition d'un véhicule devant le véhicule considéré (permettant d'éviter d'éblouir le véhicule devant), etc.

On notera que toutes les étapes du procédé décrit ci-dessus sont effectuées pour une ou plusieurs (séquence SQ) images acquises I par la caméra vidéo CAM et ce en temps réel. C'est-à-dire que l'ensemble des étapes ne prend pas plus de 1/10 seconde dans l'exemple d'une séquence de 10 images par seconde acquises par la caméra CAM. Lé procédé est donc très rapide à s'exécuter.

On notera que la mise en oeuvre du procédé de détection exposé ci-dessus peut être effectuée au moyen d'un dispositif micro programmé « software », d'une logique câblée et/ou de composants électroniques « hardware ».

Ainsi, le dispositif de détection DISP peut comporter un produit programme d'ordinateur PG comportant une ou plusieurs séquences d'instructions exécutables par une unité de traitement d'information telle qu'un microprocesseur, ou d'une unité de traitement d'un microcontrôleur, d'un ASIC, d'un ordinateur etc., l'exécution desdites séquences d'instructions permettant une mise en oeuvre du procédé décrit.

Un tel programme d'ordinateur PG peut être inscrit en mémoire non volatile inscriptible de type ROM ou en mémoire non volatile réinscriptible de type EEPROM ou FLASH. Ledit programme d'ordinateur PG peut être inscrit en mémoire en usine ou encore chargé en mémoire ou téléchargé à distance en mémoire. Les séquences d'instructions peuvent être des séquences d'instructions machine, ou encore des séquences d'un langage de commande interprétées par l'unité de traitement au moment de leur exécution.

Dans l'exemple non limitatif de la Fig. 9, le programme d'ordinateur PG est inscrit dans une mémoire de l'unité de contrôle UC du dispositif DISP.

Bien entendu, la description du procédé n'est pas limitée aux modes de réalisation et exemples décrits ci-dessus.

Ainsi, on peut très bien utiliser le procédé décrit avec une caméra arrière et des feux arrière pour effectuer un traitement adéquat CD tel que par exemple allumer les feux de brouillard.

De plus, si la région d'intérêt ROI déterminée n'est pas assez homogène, on peut ne pas l'utiliser et attendre la détermination de la région d'intérêt ROI sur l'image acquise I suivante.

Enfin, bien entendu elle peut s'appliquer à des applications différentes de l'application véhicule automobile décrite.

Ainsi, l'invention présente notamment les avantages suivants :

- Elle permet de détecter la présence d'un phénomène perturbateur F tel que le brouillard et d'effectuer un traitement adéquat CD ;

- Elle permet de déterminer la densité du brouillard F ;

- Elle permet de déterminer la distance de visibilité DVM pour un utilisateur du véhicule V ;

- Elle est simple à mettre en oeuvre (la détermination d'une région d'intérêt, de la ligne d'horizon H, d'une courbe de niveaux de gris et de l'aire associée sont faciles à traiter) ;

- Elle est facilement intégrable dans un système d'éclairage et de signalisation tel qu'un feu ou un projecteur (caméra, software/hardware) sans implantation contraignante sur la carrosserie d'un véhicule ;

- Elle permet d'anticiper la présence de brouillard en détectant à l'avance l'approche d'une nappe de brouillard avant que le véhicule ne s'y engage ; et

- Elle permet d'éviter d'utiliser deux caméras, une pour la fonction de détection d'un phénomène perturbateur et une pour une fonction de détection de ligne par exemple. On peut en effet regrouper deux fonctions dans une seule caméra qui est multifonctions.

## Revendications

1. Procédé de détection d'un phénomène perturbateur de visibilité (F) dans l'environnement (E) d'un véhicule automobile (V) comportant les étapes consistant à :

   - déterminer au moins un point d'intérêt (H) dans une image (I) acquise de l'environnement (E) du véhicule (V) ;
   - déterminer une région d'intérêt (ROI) dans ladite image (I) ;
   - déterminer une courbe de niveaux de gris (CL) à partir de ladite région d'intérêt (ROI) **caractérisé en ce que** le procédé comporte les étapes suivantes

      - émettre dans l'environnement (E) du véhicule (V) un faisceau lumineux (FX) par au moins un des projecteurs (PJ) du véhicule (V) et

   - déterminer une aire (A) dans ladite courbe de niveaux de gris (CL) en fonction du point d'intérêt (H) déterminé.

2. Procédé de détection selon la revendication 1, selon lequel il comporte une étape supplémentaire de :

   - déterminer la présence d'un phénomène perturbateur (F) en fonction d'au moins une valeur seuil (VAs) de ladite aire (A).

3. Procédé de détection selon la revendication 1 ou 2, selon lequel il comporte une étape supplémentaire de :

   - déterminer une distance de visibilité (DVM) en fonction de l'aire déterminée (A).

**4.** Procédé de détection selon l'une des revendications précédentes, selon lequel le point d'intérêt (H) se situe sur la ligne d'horizon dans l'image (I).

**5.** Procédé de détection selon l'une des revendications précédentes, selon lequel le véhicule (V) comporte un angle au volant ($\alpha$), et ladite région d'intérêt (ROI) est déterminée dans ladite image (I) en fonction dudit angle au volant ($\alpha$).

**6.** Dispositif (DISP) de détection d'un phénomène perturbateur de visibilité (F) dans l'environnement (E) d'un véhicule automobile (V) comportant :

- une unité de contrôle (UC) pour :

o déterminer au moins un point d'intérêt (H) dans une image (I) acquise de l'environnement (E) du véhicule (V) ;
o déterminer une région d'intérêt (ROI) dans ladite image (I) ;
o déterminer une courbe de niveaux de gris (CL) à partir de ladite région d'intérêt (ROI), **caractérisé en ce que** le dispositif comporte

- au moins un projecteur (PJ) pour : o émettre un faisceau lumineux (FX) dans l'environnement (E) du véhicule (V), et que l'unité de contrôle est adaptée pour

o déterminer une aire (A) dans ladite courbe de niveaux de gris (CL) en fonction du point d'intérêt (H) déterminé.

**7.** Produit programme (PG) d'ordinateur comportant une ou plusieurs séquences d'instructions exécutables par une unité de traitement d'information, l'exécution desdites séquences d'instructions permettant une mise en oeuvre du procédé selon l'une quelconque des revendications précédentes 1 à 5.

**Claims**

**1.** Method for detection of a phenomenon which disrupts visibility (F) in the environment (E) of a motor vehicle (V), comprising the steps consisting of:

- determining at least one point of interest (H) in an image (I) acquired from the environment (E) of the vehicle (V):
- determining a region of interest (ROI) in the said image (I);
- determining a curve of levels of grey (CL) from the said region of interest (ROI);

**characterised in that** the method comprises the following steps:

- emission into the environment (E) of the vehicle (V) of a light beam (FX) by at least one of the headlights (PJ) of the vehicle (V); and
- determining an area (A) in the said curve of levels of grey (CL) as a function of the point of interest (H) determined.

**2.** Method for detection according to claim 1, according to which it comprises an additional step of:

- determining the presence of a disruptive phenomenon (F) as a function of at least one threshold value (VAs) of the said area (A).

**3.** Method for detection according to claim I or 2, according to which it comprises an additional step of:

- determining a distance of visibility (DVM) as a function of the area determined (A).

**4.** Method for detection according to one of the preceding claims, according to which the point of interest (H) is situated on the horizon line in the image (I).

**5.** Method for detection according to one of the preceding claims, according to which the vehicle (V) comprises an angle on the steering wheel ($\alpha$), and the said region of interest (ROI) is determined in the said image (I) as a function of the said angle on the steering wheel ($\alpha$).

**6.** Device (DISP) for detection of a phenomenon which disrupts visibility (F) in the environment (E) of a motor vehicle (V), comprising:

- a control unit (UC) for:

o determining at least one point of interest (H) in an image (I) acquired from the environment (E) of the vehicle;
o determining a region of interest (ROI) in the said image (I);
o determining a curve of levels of grey (CL) from the said region of interest (ROI);

**characterised in that** the device comprises at least one headlight (PJ) in order to:

o emit a light beam (FX) in the environment (E) of the vehicle (V), and that the control unit is designed to determine an area (A) in the said curve of levels of grey (CL) as a function of the point of interest (H) determined.

**7.** Computer programme product (PG) comprising one or a plurality of sequences of instructions which can be executed by a data processing unit, the execution of the said sequences of instructions permitting implementation of the method according to any one of the preceding claims 1 to 5.

**Patentansprüche**

**1.** Verfahren zur Detektion eines die Sicht störenden Phänomens (F) in der Umgebung (E) eines Kraftfahrzeugs (V), mit den Schritten bestehend aus:

- Ermitteln wenigstens eines interessierenden Punktes (H) in einem von der Umgebung (E) des Fahrzeugs (V) erfassten Bildes (I);
- Ermitteln eines interessierenden Bereichs (ROI) in dem Bild (I);
- Ermitteln einer Graustufenkurve (CL) anhand des interessierenden Bereichs (ROI); **dadurch gekennzeichnet, dass** das Verfahren die folgenden Schritte umfasst:
- Aussenden eines Lichtbündels (FX) in die Umgebung (E) des Fahrzeugs (V) durch wenigstens einen der Scheinwerfer (P1) des Fahrzeugs (V); und
- Ermitteln eines Gebiets (A) in der Graustufenkurve (CL) in Abhängigkeit von dem ermittelten interessierenden Punkt (H).

**2.** Detektionsverfahren nach Anspruch 1, gemäß dem es einen zusätzlichen Schritt umfasst zum:

- Ermitteln der Präsenz eines störenden Phänomens (F) in Abhängigkeit von wenigstens einem Schwellenwert (VAs) des Gebiets (A).

**3.** Detektionsverfahren nach Anspruch 1 oder 2, gemäß dem es einen zusätzlichen Schritt umfasst zum:

- Ermitteln einer Sichtweite (DVM) in Abhängigkeit von dem ermittelten Gebiet (A).

**4.** Detektionsverfahren nach einem der vorhergehenden Ansprüche, gemäß dem der interessierende Punkt (H) auf der Horizontlinie im Bild (I) liegt.

**5.** Detektionsverfahren nach einem der vorhergehenden Ansprüche, gemäß dem das Fahrzeug (V) einen Lenkwinkel (α) aufweist und der interessierende Bereich (ROI) im Bild (I) in Abhängigkeit vom Lenkwinkel (α) ermittelt wird.

**6.** Vorrichtung (DISP) zur Detektion eines die Sicht störenden Phänomens (F) in der Umgebung (E) eines Kraftfahrzeugs (V), mit:

- einer Steuereinheit (UC) zum:

o Ermitteln wenigstens eines interessierenden Punktes (H) in einem von der Umgebung (E) des Fahrzeugs (V) erfassten Bildes (I);
o Ermitteln eines interessierenden Bereichs (ROI) in dem Bild (I);
o Ermitteln einer Graustufenkurve (CL) anhand des interessierenden Bereichs (ROI); **dadurch gekennzeichnet, dass** die Vorrichtung umfasst:

- wenigstens einen Scheinwerfer (PJ) zum:

o Aussenden eines Lichtbündels (FX) in die Umgebung (E) des Fahrzeugs (V), und dass die Steuereinheit ausgeführt ist zum
o Ermitteln eines Gebiets (A) in der Graustufenkurve (CL) in Abhängigkeit von dem ermittelten interessierenden Punkt (H).

**7.** Softwarepaket (PG) mit einer oder mehreren Befehlssequenzen, die durch eine Informationsverarbeitungseinheit ausführbar sind, wobei die Ausführung der Befehlssequenzen eine Durchführung des Verfahrens nach einem der vorhergehenden Ansprüche 1 bis 5 gestattet.

EP 2 056 093 B1

```
┌─────────────────────────────────────┐
│              ACQ_SQ(I)               │─── 1
└─────────────────────────────────────┘
                    │
                    ▼
┌─────────────────────────────────────┐
│              CALC_H(I)               │─── 2
└─────────────────────────────────────┘
                    │
                    ▼
┌─────────────────────────────────────┐
│             CALC_ROI(I)              │─── 3
└─────────────────────────────────────┘
                    │
                    ▼
┌─────────────────────────────────────┐
│             CALC_CL(ROI)             │─── 4
└─────────────────────────────────────┘
                    │
                    ▼
┌─────────────────────────────────────┐
│             CALC_A(CL, H)            │─── 5
└─────────────────────────────────────┘
                    │
                    ▼
┌─────────────────────────────────────┐
│       CALC_F(VAs)/CALC_DVM(A)        │─── 6
└─────────────────────────────────────┘
                    │
                    ▼
┌─────────────────────────────────────┐
│                 CD                   │─── 7
└─────────────────────────────────────┘
```

**Fig. 1**

**Fig. 3**

**Fig. 2**

**Fig. 4**

**Fig. 5**

EP 2 056 093 B1

**Fig. 7**

**Fig. 6**

**Fig. 8**

**Fig. 9**

EP 2 056 093 B1

**EP 2 056 093 B1**

**Documents brevets cités dans la description**

- WO 03069275 A1